Europäisches Patentamt

European Patent Office

Office européen des brevets

(19)

(11) **EP 1 397 733 B1**

(12) **FASCICULE DE BREVET EUROPEEN**

(45) Date de publication et mention
de la délivrance du brevet:
**30.11.2005 Bulletin 2005/48**

(21) Numéro de dépôt: **02743324.2**

(22) Date de dépôt: **22.05.2002**

(51) Int Cl.⁷: **G05D 23/19**, A47J 37/08

(86) Numéro de dépôt international:
**PCT/FR2002/001713**

(87) Numéro de publication internationale:
**WO 2002/095521 (28.11.2002 Gazette 2002/48)**

(54) **COMPENSATION DE TEMPERATURE DANS UN GRILLE-PAIN A CIRCUIT ELECTRONIQUE**

TEMPERATURKOMPENSATION IN EINEM BROTRÖSTER MIT EINER ELEKTRONISCHEN
SCHALTUNG

TEMPERATURE COMPENSATION IN AN ELECTRONIC CIRCUIT TOASTER

(84) Etats contractants désignés:
**AT BE CH CY DE DK ES FI FR GB GR IE IT LI LU
MC NL PT SE TR**

(30) Priorité: **23.05.2001 FR 0106832**

(43) Date de publication de la demande:
**17.03.2004 Bulletin 2004/12**

(73) Titulaire: **SEB S.A.**
**69130 Ecully (FR)**

(72) Inventeur: **BATTU, Claude**
**F-88120 Le Syndicat (FR)**

(74) Mandataire: **Kiehl, Hubert**
**SEB Développement,**
**Les 4 M-Chemin du Petit Bois,**
**B.P. 172**
**69134 Ecully Cedex (FR)**

(56) Documents cités:
**DE-C- 4 416 468          FR-A- 2 769 456**
**US-A- 6 060 698**

**Description**

La présente invention se rapporte au domaine des grille-pain et notamment à ceux contrôlés par un microcontrôleur.

L'invention concerne plus particulièrement la compensation du temps de cuisson du pain par la température initiale de la chambre de chauffe. Cette compensation est déjà connue dans les grille-pain contrôlés par un microcontrôleur, où la gamme des temps de grillage est présélectionnée selon des valeurs mises en mémoire dans le microcontrôleur, ces valeurs étant ajustées, lors de l'utilisation, en fonction de la température régnant, au départ du cycle de grillage, à l'intérieur de la chambre de cuisson.

La détermination de la température à l'intérieur de la chambre de chauffe peut être réalisée par la mesure du temps séparant deux utilisations successives du grille-pain, comme dans le document US 5,128,521. Cette solution ne permet cependant pas d'avoir une idée réelle sur la température à l'intérieur de la chambre de chauffe. De plus la déconnexion physique du grille-pain efface toute donnée relative à ce paramètre.

Dans le document FR 2 769 456, on propose de fournir en permanence l'information sur la température à l'intérieur de la chambre de chauffe à l'aide d'un capteur de température constitué d'une thermistance, permettant une détermination précise de la température par la variation importante de la valeur de résistance présentée par cet élément. Ce paramètre électrique peut être intégré de différentes façons dans une chaîne de mesure afin de déterminer sa valeur. La température est mesurée à l'intérieur même de la chambre de cuisson ou par son image, reproduite sur l'électronique de commande. La fonction de compensation résultante est déterminée selon la position du sélecteur déterminant le degré de grillage du pain et selon la valeur de résistance de la thermistance, ladite fonction étant mémorisée dans la mémoire interne du microcontrôleur,

Cependant, l'utilisation d'une thermistance présente un coût certain. L'un des objets de la présente invention est en particulier de réduire le coût d'une telle fonction de compensation de température.

La présente invention est atteinte par un procédé de détermination de l'état thermique d'une chambre de chauffe d'un grille-pain à l'intérieur de laquelle s'étendent des moyens de grillage et/ou de réchauffage, ledit grille-pain possédant notamment des moyens d'enclenchement d'un cycle de grillage ou de réchauffage du pain ainsi que des moyens de réglage du degré de grillage désiré, caractérisé en ce qu' il consiste:

- à mesurer, à deux instants différents après l'enclenchement d'un cycle de grillage ou de réchauffage, les valeurs respectives d'un condensateur thermiquement variable ou une grandeur représentative de cette valeur, ledit condensateur étant soumis à l'influence des moyens de grillage et/ou de réchauffage,

- à calculer le rapport des deux mesures réalisées afin de déterminer l'état thermique de la chambre de chauffe au moment de l'enclenchement dudit cycle de grillage ou de réchauffage.

L'utilisation d'un condensateur présentant une forte sensibilité à la température environnante permet, en le plaçant, soit dans l'enceinte de cuisson ou à proximité de cette dernière, soit dans l'environnement proche d'une résistance d'alimentation pour simuler une image thermique, de l'utiliser en tant que capteur de température. Le principe repose sur une comparaison de la valeur du condensateur ou d'une grandeur représentative de cette valeur à deux instants différents du cycle de chauffe, ce qui permet de s'affranchir de la valeur même du condensateur, puisqu'il est réalisé une mesure relative.

Avantageusement, le premier instant de mesure de la valeur du condensateur est réalisé dans un délai inférieur à 15 secondes après l'enclenchement d'un cycle de grillage ou de réchauffage du pain, ce qui permet une mesure indépendante du cycle de chauffe en cours.

Afin de déterminer au mieux l'état thermique initial de la chambre de chauffe, le second instant de mesure est réalisé au moins 10 secondes après le premier pour ainsi s'assurer que le condensateur subit réellement l'influence thermique du cycle de chauffe en cours, le rapprochement de cette mesure avec la première déterminant, par comparaison, les conditions thermiques initiales de la chambre de chauffe.

Selon l'une des mises en oeuvres possibles de l'invention, la mesure consiste en la détermination du temps de charge dudit condensateur à travers une résistance thermiquement stable, ce temps de charge n'étant alors fonction que de la valeur du condensateur. Cette mesure permet l'utilisation d'un microcontrôleur bas de gamme, et donc de faible coût, dans la mesure où un simple compteur pour effectuer une mesure de temps est nécessaire.

Avantageusement, la résistance utilisée est le potentiomètre de réglage du degré de grillage ou de réchauffage du pain, permettant de regrouper les fonctions de détermination du degré de grillage et de l'état thermique initial de la chambre de chauffe sur le même sous-ensemble.

La présente invention concerne également un circuit de commande pour grille-pain, comportant notamment une carte électronique sur laquelle est implanté un potentiomètre de réglage du degré de grillage ou de réchauffage du pain dont la valeur fixe un temps de grillage ou de réchauffage initial, un microcontrôleur permettant de gérer l'alimentation des éléments chauffants du grille-pain, le maintien du chariot en position basse de grillage, selon le temps nécessaire pour atteindre le degré de grillage ou de réchauffage souhaité, ledit microcontrôleur disposant de tables numérisées des durées initiales de grillage ou de réchauffage du pain, ainsi que de moyens permettant de déterminer la durée réelle de grillage ou de réchauffage du pain et la puissance à générer au niveau des moyens de chauffe en fonction de l'état thermique initial de la chambre de chauffe, caractérisé en ce que ce circuit de commande met en oeuvre, pour déterminer la durée réelle de grillage ou de réchauffage (Tr) du pain, un procédé de détermination de l'état thermique de ladite chambre de chauffe tel que précédemment décrit.

Selon un mode de réalisation préféré, le rapport des deux mesures détermine la valeur de la compensation c utilisée pour la définition du temps de grillage ou de réchauffage réel (Tr) en fonction de la durée de grillage (Tf) initialement fixée par le potentiomètre de réglage du degré de grillage selon la loi:

$$Tr = Tf(1-c).$$

Selon l'un des modes de réalisation possibles de la présente invention, le potentiomètre de réglage du degré de grillage ou de réchauffage du pain ainsi que le condensateur à forte variation thermique constituent un circuit de type R-C, le microcontrôleur mesurant le temps de charge du condensateur aux deux instants t1 et t2, non seulement au travers de la valeur totale du potentiomètre P, mais également au travers de la fraction sélectionnée pour le réglage du degré de grillage ou de réchauffage.

Par cet unique montage spécifié et les mesures réalisées par le microcontrôleur, il est possible, non seulement de déterminer le degré de grillage ou de réchauffage souhaité, par la mesure comparée du temps de charge du condensateur à travers la résistance totale du potentiomètre puis, successivement, à travers la fraction correspondant au degré de grillage ou de réchauffage sélectionné, mais également la détermination de l'évolution de la valeur du condensateur reflet de l'évolution thermique de la chambre de chauffe par les mesures, sous la même valeur de résistance, du condensateur à deux instants distincts.

Le montage est donc simplifié à un circuit R-C, le microcontrôleur permettant de réaliser les séries de mesure de façon simple et peu coûteuse.

La présente invention est également relative à un grille-pain, comportant un bâti, au moins une fente d'introduction du pain, un chariot porte pain, associé à un ressort de rappel, et mobile entre au moins une position de grillage et une position de déchargement du pain dans une chambre de chauffe à l'intérieur de laquelle s'étendent des moyens de grillage et/ou de réchauffage formant des sources de rayonnement infrarouge, des moyens pour déclencher le grillage du pain, un électro-aimant pour maintenir le chariot en position de grillage, un microcontrôleur associé à une carte électronique, ladite carte électronique comportant un circuit de commande tel que précédemment décrit.

Avantageusement, le microcontrôleur dispose d'un compteur de temps interne susceptible de générer un signal permettant de libérer le chariot et d'arrêter l'alimentation des moyens de chauffe lorsque la durée du cycle de grillage en cours a atteint la durée de grillage réelle, ladite durée du cycle de grillage en cours étant déterminée à l'aide du compteur de temps du microcontrôleur.

L'utilisation du microcontrôleur pour gérer l'alimentation des éléments chauffants, ainsi que la gestion de l'électroaimant évite l'utilisation de circuits analogiques coûteux et simplifie la conception de la carte électronique. L'utilisation du compteur de temps interne du microcontrôleur évite un composant spécifique pour cette fonction.

Avantageusement, le microcontrôleur, lors d'un cycle de grillage, est susceptible de mesurer, à intervalles de temps réguliers, l'état des sélecteurs afin de recalculer la durée de grillage (Tf, Tr) lorsqu'une modification, par l'utilisateur, des paramètres influant cette durée de grillage a lieu. Cette caractéristique permet à l'utilisateur de pouvoir modifier à tout moment la position du potentiomètre de réglage de la durée de grillage ou de réchauffage et de constater une prise en compte de cette modification sur la durée effective de grillage ou de réchauffage.

Ceci permet également de déterminer l'état thermique initial de la chambre de chauffe avec une plus grande précision.

D'autres particularités et avantages de la présente invention apparaîtront et ressortiront plus en détail, à la lecture de la description faite ci-après, présentant un mode de réalisation de la présente invention, en référence aux figures annexées, données à titre d'exemples non limitatifs, parmi lesquelles :

- la figure 1 représente l'architecture et les relations d'un microcontrôleur utilisé selon un exemple de mise en oeuvre de l'invention,
- la figure 2 présente le principe général du procédé proposé,
- la figure 3 est un graphe illustrant les mesures effectuées selon le procédé proposé,
- la figure 4 est un graphe illustrant le rapport entre les mesures effectuées et la fonction de compensation,
- la figure 5 montre un exemple de réalisation d'un circuit de commande pour grille-pain selon la présente invention.

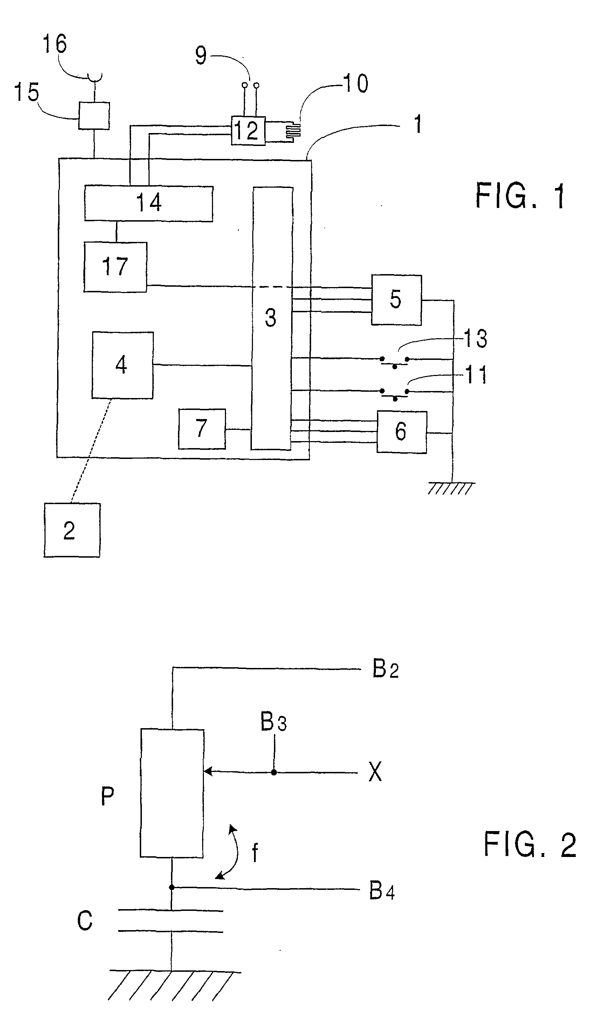

Selon la figure 1, l'architecture de commande destinée à équiper un grille-pain, non représenté, comporte, schématisé, un microcontrôleur 1, équipé d'un compteur de temps interne 7 et d'une cellule de temporisation 3.

Sur la figure 1 sont également représentés, en entrée du microcontrôleur, un interrupteur d'arrêt de cycle 11 permettant, à tout instant d'interrompre le cycle de grillage en cours et d'éjecter le pain, ainsi qu'un interrupteur de démarrage 13 déclenchant le cycle de grillage, pouvant être un bouton actionné par l'utilisateur ou simplement un interrupteur déclenché par le chariot porte pain lorsqu'il se trouve en position basse.

Selon l'exemple proposé, une cellule d'amplification des sorties 14 permet de commander un bloc de relais de cyclage 12 des éléments chauffants 10. Un électro-aimant 15, responsable du maintien en position basse du chariot porte pain 16, peut être également relié à la cellule d'amplification ou bien, tel que présenté dans l'exemple, être piloté directement par le microcontrôleur 1.

L'alimentation électrique est représentée en 9 et permet, notamment, par l'intermédiaire du bloc de relais 12 l'alimentation d'au moins l'un des éléments chauffants 10 du grille-pain.

Le grille-pain peut disposer de plusieurs fonctions accessibles par l'utilisateur, via le sélecteur 5, déterminant un mode de fonctionnement particulier, tel que le réchauffage, la décongélation, une fonction rapide, un mode spécifique de cuisson du pain de type baguette, ou bien de beignets de type bagel, où le grillage du pain est effectif ou accentué sur une seule face dudit pain.

Le bloc fonctionnel 6 regroupe à la fois ce choix des différentes fonctions disponibles sur le grille-pain, ainsi que les moyens de détermination de l'état thermique de la chambre de chauffe, tel qu'il sera présenté par la suite.

Selon la fonction choisie ainsi que le type de grille-pain, la puissance de chauffe peut être amenée à varier, par l'intermédiaire d'une cellule 17 commandant le bloc de relais de cyclage, le rapport de cyclage étant modifié selon le choix de l'utilisateur.

Le réglage du degré de grillage du pain est obtenu par un potentiomètre P, en référence à la figure 2, actionné par l'utilisateur. Dans l'exemple proposé, l'indication fournie par le potentiomètre P est analogique. Cette indication est rendue numérique pour être compréhensible du microcontrôleur utilisé qui ne possède pas de fonction intégrée de conversion analogique / numérique. L'invention couvre toutefois l'utilisation de microcontrôleur possédant cette fonction intégrée de conversion analogique / numérique, le choix de ne pas utiliser de tels composants étant essentiellement lié à leur coût actuel.

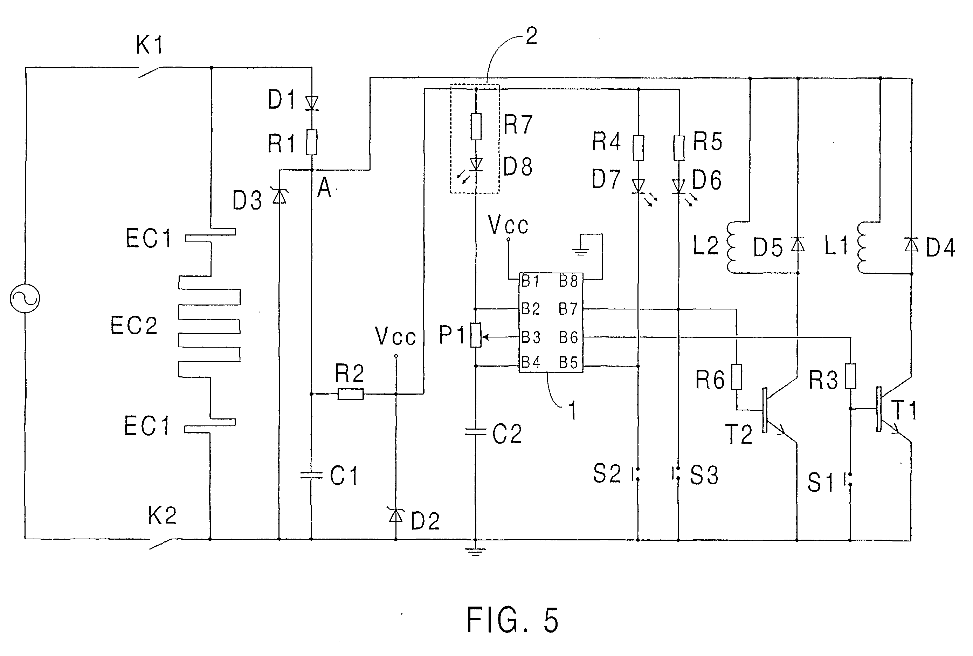

La structure électrique de la figure 2, qui est donc intégrée dans la structure du bloc fonctionnel 6 de la figure 1, est utilisée pour réaliser la conversion analogique / numérique. Sur cette figure, les notations B2, B3 et B4 correspondent à certaines des broches du microcontrôleur tel qu'elles apparaissent sur le composant de la figure 5, broches qui sont les ports d'entrée-sortie auxquels sont connectées les liaisons électriques présentées. Le principe de la mesure est sensiblement le même que celui exposé dans le document FR 2 769 456, et n'est qu'une des variantes possibles pour effectuer cette conversion, donnée à titre d'exemple illustratif.

Ainsi, la détermination du positionnement X du curseur du potentiomètre P est basé sur le temps de charge d'un condensateur C à travers cette résistance rendue variable par le réglage effectué par l'utilisateur du degré de grillage et/ou réchauffage souhaité du pain.

Les séquences suivantes, en référence à la figure 2, sont ainsi générées par le microcontrôleur :

- mise en haute impédance des ports $B_2$ et $B_3$, qui correspond à une déconnexion, puis mise à l'état de tension bas du port $B_4$ afin de décharger le condensateur C,
- mise en haute impédance des ports $B_3$ et $B_4$ puis mise à l'état de tension haut du port $B_2$ afin de charger le condensateur C à travers la résistance P jusqu'à l'état haut du port $B_4$. Le temps de charge est noté T1P,
- réinitialisation du système par la mise en haute impédance des ports $B_2$, $B_3$ et mise à l'état de tension bas du port $B_4$ afin de décharger le condensateur C,
- mise à l'état de tension haut de $B_3$ et charge de C à travers une fraction de P, notée f, jusqu'à l'état de tension haut du port $B_4$. Le temps de charge est noté T2P.

Les deux charges s'effectuant sur la même résistance et le même condensateur, le rapport des temps T2P/T1P est égal à la fraction f, comprise entre 0 et 1. Cette méthode permet de s'affranchir de la dispersion rencontrée sur les valeurs de résistance du potentiomètre, de l'ordre de 20%.

Le compteur de temps 7 du microcontrôleur permet de déterminer les deux temps T1P et T2P entre le début de la charge du condensateur C et le passage à l'état 1 du port $B_4$ et donc la fraction f qui est représentative de la position du curseur.

Préférentiellement, le potentiomètre P utilisé est un potentiomètre de 250° d'angle électrique. La valeur de f est stockée dans un module de mémoire 4.

La position du curseur détermine donc le temps de grillage "à froid" Tf du grille-pain, qui sont les temps appliqués lorsque le grille-pain s'est complètement refroidi d'une précédente utilisation. Ces temps de grillage dépendent du type de grille-pain considéré ainsi que de différents paramètres tels que la puissance des éléments chauffants, la tension utilisée, les différentes fonctions de grillage ou réchauffage disponibles, voire les habitudes alimentaires des utilisateurs potentiels.

Toutes ces informations ainsi que les fonctions réellement actives et les paramètres disponibles sur le grille-pain sont stockés dans la mémoire 4 et représentent les données permettant de déterminer les temps de grillage "à froid" Tf.

La mise en mémoire des données, la mise au point et plus généralement la programmation de la carte électronique et les tests associés sont avantageusement réalisés par une liaison IR à haut débit symbolisé par le bloc fonctionnel 2 de la figure 1, ce qui permet de pouvoir les réaliser in-situ, sur la chaîne de montage par exemple.

Par ailleurs, ces composants nécessaires pour les opérations précédentes peuvent rester à demeure sur la carte électronique pour être alors utilisés afin de transmettre à distance des informations de test, calibrage, dysfonctionnements, données de temps de grillage, etc... Ils peuvent également être utilisés pour réaliser différentes gammes de produits, notamment par la modification de certains paramètres, et ceci de façon simple et économique, en évitant de réaliser une carte électronique de commande par famille de produit.

La particularité de la présente invention réside dans la prise en compte de la température régnant à l'intérieur du grille-pain, par l'utilisation d'un condensateur présentant une dépendance relativement importante avec la température, et qui joue donc alors le rôle de capteur de température, en étant, soit placé dans l'enceinte de cuisson, soit à proximité.

Selon l'exemple proposé, ledit condensateur utilisé en tant que capteur de température est le condensateur C précédemment présenté et inséré dans le circuit de mesure de la valeur du potentiomètre P de réglage du degré de grillage souhaité. Le condensateur est de préférence un condensateur céramique de faible prix de revient.

La forte variation thermique du condensateur C ne porte pas préjudice à la détermination de la fraction f, dans la mesure où la détermination des temps T1P et T2P est réalisée dans un laps de temps très court (quelques ms) pendant lequel la valeur du condensateur C n'a pas le temps d'évoluer significativement. Par ailleurs, les temps de charge T1 P et T2P sont déterminés peu de temps après l'enclenchement d'un cycle de chauffe. Or l'inertie des éléments chauffants ajoutée à celle de la réponse à un changement de température du condensateur C entraînent que ce dernier réagit peu pendant les 10 premières secondes d'un cycle de chauffe, ce qui est largement suffisant pour déterminer la fraction f du réglage du degré de brunissement ou de réchauffage du pain.

Bien qu'il soit économiquement plus intéressant de regrouper les deux fonctions de détermination du degré de grillage ou de réchauffage et de l'état thermique de la chambre de chauffe du grille-pain sur le même circuit R-C, la présente invention couvre également le cas où deux circuits distincts sont utilisés, l'un avec le potentiomètre et un condensateur thermiquement stable, l'autre avec un condensateur à forte variation thermique et une résistance fixe et stable.

Le principe de la détermination de l'état thermique initial de la chambre de chauffe est donc de mesurer la charge du condensateur à travers la valeur totale du potentiomètre P, à deux instants différents, l'un très peu de temps après le début d'un cycle de grillage et/ou de réchauffage, et l'autre après un laps de temps suffisant pour que le condensateur ait été notablement influencé par la chaleur dégagée par les éléments chauffants, ou par image thermique à l'aide de la résistance d'alimentation.

Comme mentionné précédemment, la mesure T1 P correspond au temps de charge du condensateur à travers le potentiomètre P. En effectuant cette mesure aux deux instants précédemment mentionnés, il est possible de déterminer l'état thermique de la chambre de chauffe au départ du cycle de grillage et/ou de réchauffage.

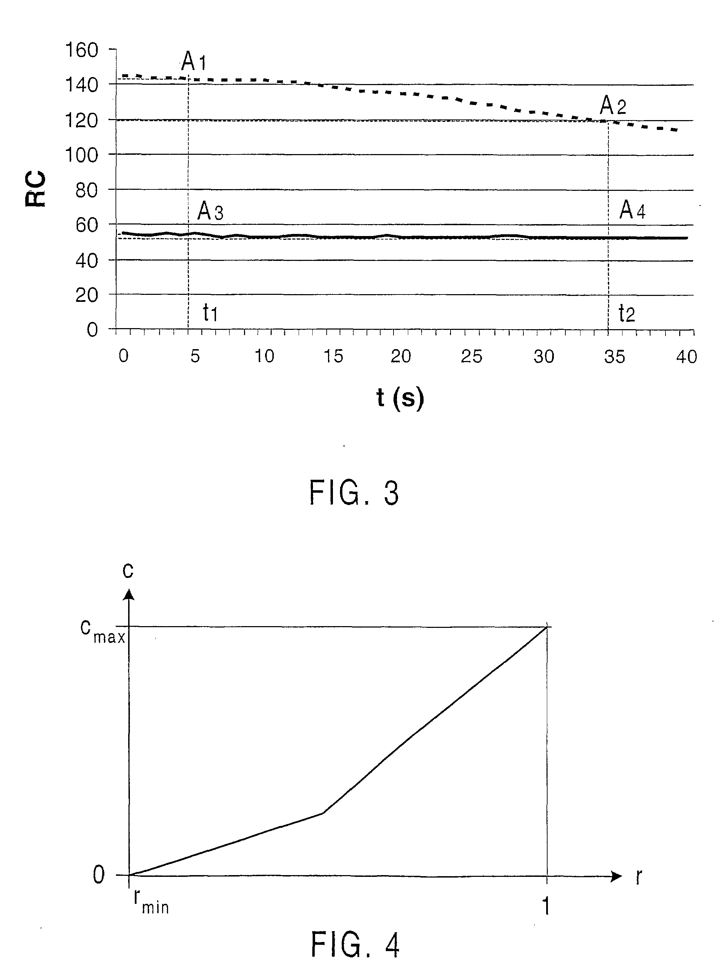

La figure 3 montre en effet l'évolution, en valeur arbitraire, du temps de charge du condensateur C au travers du potentiomètre P, en fonction du temps, un cycle de grillage ayant été déclenché au temps t = 0 s.

La courbe en pointillé est représentative d'un déclenchement du cycle de grillage avec une chambre de chauffe initialement froide, alors que la courbe pleine est obtenue après que plusieurs cycles de grillage aient été réalisés.

Il est bien visible qu'après un certain nombre de cycles consécutifs réalisés, la chambre de grillage s'est stabilisée à une certaine température, entraînant peu ou pas d'évolution, pour un nouveau cycle de grillage, du temps de charge du condensateur C à travers le potentiomètre P.

Ainsi, en réalisant deux mesures aux instants t1 et t2 tels que précédemment définis, les valeurs obtenues du temps de charge du condensateur sont d'autant plus différentes que la chambre de chauffe était initialement froide au départ du cycle. Le rapport entre les deux mesures représente donc l'état thermique, qui peut être affiné avec la valeur même du temps de charge, celui-ci étant d'autant plus important que la chambre est froide.

Sur l'exemple proposé, les valeurs obtenues A1 et A2 sont élevées et le rapport des deux valeurs A2/A1, noté r par la suite, est faible, ce qui traduit une chambre initialement froide, tandis que les valeurs A3 et A4 sont faibles et proches l'une de l'autre, ce qui traduit une chambre de chauffe initialement à une température élevée.

On peut par ailleurs noter que la variation du temps de charge du condensateur, pour une chambre initialement froide, est faible pendant environ les 15 premières secondes, puis décroît plus rapidement jusqu'à la fin du cycle de grillage, l'intervalle de temps pendant lequel la variation est faible pouvant être expliqué par le temps de réponse du condensateur liée notamment à l'inertie thermique. Ce temps de réponse est donc variable selon le mode de réalisation des chambres de chauffe, de la puissance utilisée, du positionnement du condensateur,...

Globalement, il est donc réalisé une double série de mesures, pour déterminer, d'une part la fonction f relative au degré de grillage souhaité, et d'autre part l'état thermique initial de la chambre de chauffe, qui peut être quantifié, comme précédemment expliqué.

Cette quantification de l'état thermique initial de la chambre de chauffe est utilisée pour apporter une correction aux temps Tf s'appliquant lorsque la chambre de chauffe est froide, par l'intermédiaire d'une fonction de compensation c pouvant prendre diverses formulations, tel qu'il est connu dans l'art antérieur par la mesure de la température de la chambre de chauffe. Selon une mise en oeuvre courante, la fonction c est comprise entre 0 et 1, et permet de déterminer le temps de grillage réel Tr selon la formule :

$$Tr = Tf\,(1-c)$$

La correspondance entre la valeur de c et le rapport r du temps de charge à deux instants successifs dépend de la configuration des différentes chambres de chauffe, de la puissance des éléments chauffants. En effet, la mesure n'est pas une mesure instantanée, mais découle de deux mesures à des temps différents. Il faut donc tenir compte de l'évolution dynamique de la chambre de chauffe pour déterminer l'état thermique initial de ladite chambre.

La figure 4 montre un exemple de relation entre la valeur du rapport r et la valeur de la fonction de compensation c. La valeur de r varie entre $r_{min}$ et 1, tandis que la fonction de compensation c varie entre 0 et $C_{max}$. Préférentiellement, la courbe permettant d'obtenir les valeurs de c selon le rapport r est représentée par deux portions linéaires, dont la pente est plus importante pour les valeurs de r élevées, où le besoin de compensation est important puisque la chambre de cuisson présente initialement une température importante. D'autres types de relation entre les valeurs de c et de r peuvent être envisagées sans sortir du cadre de la présente invention, et peuvent notamment être influencés par les paramètres et fonctions disponibles.

La mise en oeuvre de la fonction de compensation ne sera pas détaillée dans la présente description. Elle est en effet connue en soi dans différents documents et notamment largement commentée dans le document FR 2 769 456.

La figure 5 montre une carte électronique pouvant être utilisée pour la mise en oeuvre de l'invention ainsi que l'implantation des différents composants.

Ainsi, l'alimentation est réalisée à partir de la tension secteur amenée jusqu'aux interrupteurs K1, K2 en liaison avec la charge représentée par deux éléments chauffants EC1 latéraux et un élément chauffant central EC2, le grille-pain considéré possédant deux chambres de chauffe. Par l'intermédiaire de la diode D1, montée en série avec la résistances R1, une tension de 60V est présente au point A, lorsque les interrupteurs K1, K2 sont fermés. La diode D3 et le condensateur C1 permettent respectivement d'écrêter et de filtrer le signal de cette tension d'alimentation.

Le microcontrôleur 1 utilisé possède 8 ports d'entrée/sortie notés B1 à B8. Les ports B1 et B8 servent à son alimentation. Les ports B2, B3 et B4 ont déjà été introduits. La résistance R7 et la diode D8 en série symbolisent la liaison IR à haut débit de paramétrage et de mise au point de la carte. Cette liaison est alimentée par le montage Vcc/R2/D2 qui alimente également la diode D7 via la résistance R4. La seconde extrémité de la diode D7 est reliée au port B5 du microcontrôleur ainsi qu'à un interrupteur S2. Ce montage correspond à un mode de fonctionnement particulier (réchauffage, décongélation, fonction "bagels",...).

Un montage identique est proposé avec la résistance R5 en série avec la diode D6, elle-même reliée à l'interrupteur S3 et au port B7 du microcontrôleur, permettant ainsi de créer une seconde fonction supplémentaire. Dans le cas présent, cette fonction correspond à la fonction "bagels" où une face de l'aliment à griller est chauffée davantage que l'autre face. Pour ce faire, un relais L2 est commandé par un transistor T2 et piloté par l'interrupteur S3 relié à la base du transistor T2 au travers d'une résistance R6. L'émetteur de ce transistor est relié à la masse, tandis que son collecteur est relié à une borne du relais L2. L'autre borne de ce relais est reliée au point A. Dans le montage tel que présenté, le relais permet de couper l'alimentation de l'élément central lorsque la fonction "bagels" a été sélectionnée. D'autres variantes peuvent être également mises en oeuvre, comme par exemple de réaliser des cycles d'alimentation uniquement sur l'élément central, ou bien sur les éléments latéraux, voire l'ensemble des éléments chauffants, afin de réaliser un maintien au chaud, ou la réalisation de pain de type biscottes,...

Enfin, le port B6 permet de piloter l'électroaimant représenté par le bobinage L1, via la résistance R3, le transistor T1 et l'interrupteur de cycle S1, dans un montage identique à celui du relais L2.

L'électroaimant sera de préférence commandé par des impulsions de tension de 50 à 100 V selon le type d'électroaimant choisi, à une fréquence de 20 KHz, la largeur des impulsions étant de l'ordre de 8 µs. Cette disposition permet de diminuer le bobinage de l'électroaimant, par la tension élevée présente, tout en diminuant l'énergie dissipée.

Le fonctionnement d'un grille-pain selon la présente invention peut être décrit par les séquences suivantes :

① l'utilisateur règle le degré de grillage ou de cuisson souhaité, à l'aide du curseur du potentiomètre P.

② lorsque le chariot porte pain est amené en position basse par l'utilisateur, le microcontrôleur déclenche alors l'alimentation générale de la carte électronique et des éléments chauffants. Dans le même temps, un compteur initialisé à 0 est déclenché. Le microcontrôleur effectue alors, chaque seconde, les mesures T1 P et T2P.

③ dans un délai de l'ordre de 10s après l'enclenchement d'un cycle, le microcontrôleur détermine la valeur f du signal généré sur la broche $B_3$ du microcontrôleur, par les mesures de T1P et T2P et mémorise la valeur T1P (valeur totale prise sur le potentiomètre). Selon la complexité du grille-pain et le mode de fonctionnement choisi lorsqu'une telle possibilité est offerte, le microcontrôleur détermine les valeurs de grillage ou de cuisson selon la valeur de f, ainsi que la courbe générale de la fonction de compensation, et notamment la valeur maximale $c_{max}$.

④ environ 30s après l'enclenchement d'un cycle de grillage et/ou de réchauffage, le microcontrôleur détermine et mémorise à nouveau la valeur T1P, et effectue le rapport avec la valeur initialement trouvée à l'étape ③ . Ce rapport est alors le reflet de l'état thermique de la chambre de chauffe au début du cycle de chauffe. A l'aide de la procédure décrite précédemment, la fonction de correction c est calculée. Le temps de grillage réel Tr est alors le temps de grillage à froid Tf modulé par la fonction c de compensation.

⑤ Chaque seconde, ce compteur est incrémenté. Cet intervalle est défini arbitrairement à une seconde. Il peut être choisi à une autre valeur sans sortir du cadre de la présente invention.

Lorsque le compteur affiche une valeur supérieure au temps de grillage Tr déterminé, le cycle de grillage s'arrête, le microcontrôleur coupant l'alimentation de la bobine de l'électro-aimant retenant le chariot porte pain qui peut alors remonter vers une position de déchargement du pain, tout en coupant l'alimentation des éléments chauffants et du microcontrôleur lui-même.

Dans une variante de réalisation, lors d'un cycle de grillage, les paramètres sélectionnés par l'utilisateur (degré de grillage et choix de la fonction), influençant le temps de grillage, sont recalculés chaque seconde par le microcontrôleur, et une nouvelle durée de grillage est éventuellement calculée lorsque ces paramètres ont été modifiés. Cette éventuelle nouvelle durée remplace la durée initialement prévue, et ceci, bien que le cycle de grillage ait débuté. Ainsi, même des modifications tardives, par l'utilisateur, des paramètres de grillage, sont prises en considération pour le calcul de la durée de grillage du cycle en cours, permettant de respecter au mieux les souhaits de l'utilisateur.

Afin de pouvoir alimenter continuellement l'électroaimant par les impulsions mentionnées précédemment, le programme du microcontrôleur est de type "grafcet" et permet un fonctionnement en multitâches où le microcontrôleur commande à intervalles réguliers les impulsions de maintien de l'électroaimant, tout en réalisant entre temps les opérations susmentionnées.

La présente invention n'est pas limitée au seul exemple de réalisation proposé, mais couvre également les variantes de réalisation liées à la technologie utilisée, notamment dans le choix du microcontrôleur, ce dernier pouvant être équipé d'une fonction intégrée de conversion analogique / numérique.

Par ailleurs, le condensateur utilisé peut être disposé à l'extérieur de la chambre de chauffe, soumis indirectement à l'influence des éléments chauffants par l'intermédiaire d'une température dite "image", où un composant subit un échauffement en correspondance avec l'échauffement de la chambre de chauffe. Ce peut être une résistance placée dans le circuit d'alimentation des éléments chauffants et qui, par effet Joule, s'échauffe selon l'appel de courant desdits éléments chauffants, le condensateur étant alors placé à proximité immédiate de cette résistance témoin.

Par ailleurs, selon le type de grille-pain considéré, les deux instants de mesure peuvent être modifiés, notamment le second, s'il est initialement supérieur au temps de grillage le plus court disponible sur le grille-pain. Il est toutefois préférable de reculer au maximum l'instant de la deuxième mesure afin d'augmenter la précision sur les valeurs comparées.

Il est à noter que les étapes de commande de l'alimentation et de l'arrêt des moyens de chauffe ainsi que de la remontée du chariot porte pain peuvent être réalisées par des moyens traditionnels et couramment rencontrés dans la mise en oeuvre de tels appareils, sans recours à un contrôle par microcontrôleur, sans sortir du cadre de la présente invention.

Toutefois, l'utilisation d'un microcontrôleur pour gérer l'ensemble des fonctions d'un grille-pain permet d'adapter facilement de nouvelles fonctions et/ou d'étendre celles existantes, simplement par une nouvelle programmation du microcontrôleur.

**Revendications**

1. Procédé de détermination de l'état thermique d'une chambre de chauffe d'un grille-pain à l'intérieur de laquelle s'étendent des moyens de grillage et/ou de réchauffage, ledit grille-pain possédant notamment des moyens d'enclenchement d'un cycle de grillage ou de réchauffage du pain ainsi que des moyens de réglage du degré de grillage désiré, **caractérisé en ce qu'**il consiste:

   - à mesurer, à deux instants différents (t1) et (t2) après l'enclenchement d'un cycle de grillage ou de réchauffage, les valeurs respectives (A1) puis (A2) d'un condensateur (C) thermiquement variable ou une grandeur représentative de cette valeur, ledit condensateur (C) étant soumis à l'influence des moyens de grillage et/ou de réchauffage, le second instant de mesure (t2) étant réalisé au moins 10 secondes après le premier,

-   à calculer le rapport (r) des deux mesures (A1, A2) réalisées afin de déterminer l'état thermique de la chambre de chauffe au moment de l'enclenchement dudit cycle de grillage ou de réchauffage.

2.   Procédé de détermination de l'état thermique d'une chambre de chauffe selon la revendication précédente, **caractérisé en ce que** le premier instant (t1) de mesure de la valeur du condensateur est réalisé dans un délai inférieur à 15 secondes après l'enclenchement d'un cycle de grillage ou de réchauffage du pain.

3.   Procédé de détermination de l'état thermique d'une chambre de chauffe selon l'une des revendications précédentes, **caractérisé en ce que** la mesure consiste en la détermination du temps de charge (T1P, T2P) dudit condensateur (C) à travers une résistance thermiquement stable.

4.   Procédé de détermination de l'état thermique d'une chambre de chauffe selon la revendication précédente, **caractérisé en ce que** la résistance utilisée est le potentiomètre (P) de réglage du degré de grillage ou de réchauffage du pain.

5.   Circuit de commande pour grille-pain, comportant notamment une carte électronique sur laquelle est implanté un potentiomètre (P) de réglage du degré de grillage ou de réchauffage du pain dont la valeur fixe un temps de grillage ou de réchauffage initial (Tf), un microcontrôleur (1) permettant de gérer l'alimentation des éléments chauffants (10) du grille-pain, le maintien du chariot en position basse de grillage, selon le temps nécessaire pour atteindre le degré de grillage ou de réchauffage souhaité, ledit microcontrôleur (1) disposant de tables numérisées des durées initiales de grillage ou de réchauffage (Tf) du pain, ainsi que de moyens permettant de déterminer la durée réelle de grillage ou de réchauffage (Tr) du pain et la puissance à générer au niveau des moyens de chauffe en fonction de l'état thermique initial de la chambre de chauffe, **caractérisé en ce que** ce circuit de commande met en oeuvre, pour déterminer la durée réelle de grillage ou de réchauffage (Tr) du pain, un procédé de détermination de l'état thermique de ladite chambre de chauffe selon l'une des revendications 1 à 4.

6.   Circuit de commande selon la revendication précédente, **caractérisé en ce qu'**il utilise le rapport (r) des deux mesures (A1, A2) pour déterminer la valeur de la compensation (c) utilisée pour la définition du temps de grillage ou de réchauffage réel (Tr) en fonction de la durée de grillage (Tf) initialement fixée par le potentiomètre de réglage du degré de grillage selon la loi:

$$Tr = Tf (1-c).$$

7.   Circuit de commande selon la revendication précédente, **caractérisé en ce que** le potentiomètre (P) de réglage du degré de grillage ou de réchauffage du pain ainsi que le condensateur (C) à forte variation thermique constituent un circuit de type R-C, le microcontrôleur (1) mesurant le temps de charge (T1P, T2P) du condensateur (C) aux deux instants (t1) et (t2), non seulement au travers de la valeur totale du potentiomètre (P), mais également au travers de la fraction (f) sélectionnée pour le réglage du degré de grillage ou de réchauffage.

8.   Grille-pain, comportant un bâti, au moins une fente d'introduction du pain, un chariot porte pain, associé à un ressort de rappel, et mobile entre au moins une position de grillage et une position de déchargement du pain dans une chambre de chauffe à l'intérieur de laquelle s'étendent des moyens de grillage et/ou de réchauffage (10) formant des sources de rayonnement infrarouge, des moyens pour déclencher le grillage du pain, un electro-aimant pour maintenir le chariot en position de grillage, un microcontrôleur (1) associé à une carte électronique, ladite carte électronique comportant un circuit de commande selon l'une des revendications 5 à 7.

9.   Grille-pain selon la revendication précédente, **caractérisé en ce que** le microcontrôleur (1) dispose d'un compteur de temps interne (7) susceptible de générer un signal permettant de libérer le chariot et d'arrêter l'alimentation des moyens de chauffe (10) lorsque la durée du cycle de grillage en cours a atteint la durée de grillage réelle (Tr), ladite durée du cycle de grillage en cours étant déterminée à l'aide du compteur de temps (7) du microcontrôleur (1).

10.   Grille-pain selon l'une des revendications 8 ou 9, **caractérisé en ce que** le microcontrôleur (1), lors d'un cycle de grillage, est susceptible de mesurer, à intervalles de temps réguliers, l'état des sélecteurs (5, 6) afin de recalculer la durée de grillage (Tf, Tr) lorsqu'une modification, par l'utilisateur, des paramètres influant cette durée de grillage a lieu.

**Patentansprüche**

1.   Verfahren zur Bestimmung des thermischen Zustands einer Heizkammer eines Toasters, in der sich Mittel zum Rösten und/oder zum Wiedererwärmen erstrecken, wobei der Toaster insbesondere Mittel zum Auslösen eines Zyklus zum Rösten oder Wiedererwärmen des Brotes sowie Mittel zum Einstellen des gewünschtes Röstgrades aufweist, **dadurch gekennzeichnet, dass** es darin besteht:

- zu zwei unterschiedlichen Zeitpunkten (t1) und (t2) nach dem Auslösen eines Röst- oder Wiedererwärmungszyklus den Wert (A1) bzw. dann den Wert (A2) eines thermisch variablen Kondensators (C) oder eine für diesen Wert repräsentative Größe zu messen, wobei der Kondensator (C) dem Einfluss der Mittel zum Rösten und/oder zum Wiedererwärmen unterliegt, wobei der zweite Messzeitpunkt (t2) mindestens 10 Sekunden nach dem ersten erfolgt,

- das Verhältnis (r) der beiden erhaltenen Messwerte (A1, A2) zu berechnen, um den thermischen Zustand der Heizkammer beim Auslösen des Röst- oder Wiedererwärmungszyklus zu bestimmen.

2. Verfahren zur Bestimmung des thermischen Zustands einer Heizkammer nach dem vorhergehenden Anspruch, **dadurch gekennzeichnet, dass** der erste Zeitpunkt (t1) zur Messung des Kondensatorwertes in einem Zeitraum von weniger als 15 Sekunden nach dem Auslösen eines Zyklus zum Rösten oder Wiedererwärmen des Brotes erfolgt.

3. Verfahren zur Bestimmung des thermischen Zustands einer Heizkammer nach einem der vorhergehenden Ansprüche, **dadurch gekennzeichnet, dass** die Messung darin besteht, die Zeit (T1P, T2P) zum Aufladen des Kondensators (C) über einen thermisch stabilen Widerstand zu bestimmen.

4. Verfahren zur Bestimmung des thermischen Zustands einer Heizkammer nach dem vorhergehenden Anspruch, **dadurch gekennzeichnet, dass** der verwendete Widerstand das Potentiometer (P) zum Einstellen des Röst- oder Wiedererwärmungsgrades des Brotes ist.

5. Steuerkreis für einen Toaster, der insbesondere eine Elektronikkarte aufweist, auf der ein Potentiometer (P) zum Einstellen des Röst- oder Wiedererwärmungsgrades des Brotes eingesetzt ist, dessen Wert eine Ausgangszeit (Tf) zum Rösten oder Wiedererwärmen festlegt, wobei es eine Mikrosteuereinheit (1) ermöglicht, die Versorgung der Heizelemente (10) des Toasters und das Halten des Schlittens in der unteren Röstposition in Abhängigkeit von der Zeit zu steuern, die erforderlich ist, um den gewünschten Röst- oder Wiedererwärmungsgrad zu erreichen, wobei die Mikrosteuereinheit (1) über digitalisierte Tabellen über die Ausgangsdauern (Tf) zum Rösten oder Wiedererwärmen des Brotes sowie über Mittel verfügt, die die Bestimmung der reellen Röst- oder Wiedererwärmungsdauer (Tr) des Brotes und der an den Heizmitteln zu erzeugenden Leistung in Abhängigkeit von dem thermischen Ausgangszustand der Heizkammer ermöglichen, **dadurch gekennzeichnet, dass** dieser Steuerkreis zur Bestimmung der reellen Röst- oder Wiedererwärmungsdauer (Tr) des Brotes ein Verfahren zur Bestimmung des thermischen Zustands der Heizkammer nach einem der Ansprüche 1 bis 4 anwendet.

6. Steuerkreis nach dem vorhergehenden Anspruch, **dadurch gekennzeichnet, dass** er das Verhältnis (r) der beiden Messwerte (A1, A2) verwendet, um den Kompensationswert (c), der für die Definition der reellen Röst- oder Wiedererwärmungszeit (Tr) in Abhängigkeit von der durch das Potentiometer zum Einstellen des Röstgrades anfänglich festgelegten Röstdauer (Tf) verwendet wird, gemäß dem folgenden Gesetz zu bestimmen:

$$Tr = Tf \, (1-c).$$

7. Steuerkreis nach dem vorhergehenden Anspruch, **dadurch gekennzeichnet, dass** das Potentiometer (P) zum Einstellen des Röst- oder Wiedererwärmungsgrades des Brotes sowie der Kondensator (C) mit starker thermischer Änderung ein RC-Glied bilden, wobei die Mikrosteuereinheit (1) die Zeit (T1P, T2P) zum Aufladen des Kondensators (C) zu beiden Zeitpunkten (t1) und (t2) nicht nur über den Gesamtwert des Potentiometers (P), sondern auch über den Bruchteil (f) misst, welcher für das Einstellen des Röst- oder Wiedererwärmungsgrades gewählt wurde.

8. Toaster, der ein Gehäuse aufweist, mindestens einen Spalt zum Einlegen des Brotes, einen Brothalterschlitten, welcher einer Rückstellfeder zugeordnet und in einer Heizkammer mindestens zwischen einer Röstposition und einer Position, in der das Brot entnommen wird, beweglich ist, wobei sich in der Heizkammer Mittel (10) zum Rösten und/oder zum Wiedererwärmen, die Infrarotstrahlungsquellen bilden, erstrecken, Mittel zum Auslösen des Röstens des Brotes, ein Elektromagnet zum Halten des Schlittens in der Röstposition und eine Mikrosteuereinheit (1), welche einer Elektronikkarte zugeordnet ist, wobei die Elektronikkarte einen Steuerkreis nach einem der Ansprüche 5 bis 7 aufweist.

9. Toaster nach dem vorhergehenden Anspruch, **dadurch gekennzeichnet, dass** die Mikrosteuereinheit (1) über einen inneren Zeitzähler (7) verfügt, der ein Signal erzeugen kann, das es ermöglicht, den Schlitten freizugeben und die Versorgung der Heizmittel (10) anzuhalten, wenn die Dauer des laufenden Röstzyklus die reelle Röstdauer (Tr) erreicht hat, wobei die Dauer des laufenden Röstzyklus mit Hilfe des Zeitzählers (7) der Mikrosteuereinheit (1) bestimmt wird.

10. Toaster nach Anspruch 8 oder 9, **dadurch gekennzeichnet, dass** während eines Röstzyklus die Mikrosteuereinheit (1) den Zustand der Auswahlvorrichtungen (5, 6) in regelmäßigen Zeitintervallen messen kann, um die Röstdauer (Tf, Tr) erneut zu berechnen, wenn eine Änderung der Parameter, die diese Röstdauer beeinflussen, durch den Benutzer erfolgt.

## Claims

1. A method of determining the thermal state of a toaster heater chamber in which there extend toasting means and/or heater means, said toaster possessing in particular means for engaging a bread toasting or heating cycle, and means for adjusting the desired degree of toasting, the method being **characterized in that** it consists:

   - at two different instants (t1, t2) after engagement of a toasting or heating cycle, in measuring the respective capacitances A1 and then A2 of a temperature-variable capacitor (C) or a magnitude representative of said capacitances, said capacitor (C) being subjected to the influence of the toaster and/or heater means, the second measurement instant (t2) being at least 10 seconds after the first; and
   - in calculating the ratio (r) of the two measurements (A1, A2) taken in order to determine the thermal state of the heater chamber at the moment said toasting or heating cycle was engaged.

2. A method of determining the thermal state of a heater chamber according to the preceding claim, **characterized in that** the first instant (t1) for measuring the capacitance of the capacitor takes place within a period of less than 15 seconds after a bread toasting or heating cycle has been engaged.

3. A method of determining the thermal state of a heater chamber according to either preceding claim, **characterized in that** the measurement consists in determining the time (T1P, T2P) taken by said capacitor (C) to charge through a temperature-stable resistor.

4. A method of determining the thermal state of a heater chamber according to the preceding claim, **characterized in that** the resistor used is the potentiometer (P) for adjusting the degree to which bread should be toasted or heated.

5. A toaster control circuit including in particular an electronics card having installed thereon a potentiometer (P) for adjusting the extent to which bread is toasted or heated, the resistance of the potentiometer determining an initial toasting or heating time (Tf), a microcontroller (1) for managing power supply to heater elements (10) of the toaster, for keeping the carriage in its low, toasting position for the time required to reach the desired degree of toasting or heating, said microcontroller (1) possessing digital tables of initial durations (Tf) for toasting or heating the bread, and means enabling the real duration (Tr) for toasting or heating the bread and the power to be generated by the heater means as a function of the initial thermal state of the heater chamber, the control circuit being **characterized in that**, in order to determine the real duration (Tr) for toasting or heating the bread it implements a method of determining the thermal state of said heater chamber in accordance with any one of claims 1 to 4.

6. A control circuit according to the preceding claim, **characterized in that** it uses the ratio (r) of two the measurements (A1, A2) for determining the compensation value (c) used for defining the real toasting or heating time (Tr) as a function of the toasting time (Tf) initially set by the potentiometer for adjusting the degree of toasting, in application of the following relationship:

$$Tr = Tf (1-c)$$

7. A control circuit according to the preceding claim, **characterized in that** the potentiometer (P) for adjusting the degree of toasting or heating the bread and the capacitor (C) presenting high thermal variation, constitutes an R-C type circuit, the microcontroller (1) measuring the time (T1P, T2P) taken to charge the capacitor (C) at two instants (t1, t2), not only through the total resistance of the potentiometer (P), but also through the fraction (f) selected for adjusting the degree of toasting or heating.

8. A toaster comprising a structure, at least one bread insertion slot, a bread carriage associated with a return spring and movable between at least one toasting position and a toast-removal position in a heater chamber within which there extend toaster and/or heater means (10) forming sources of infrared radiation, means for triggering toasting of the bread, an electromagnet for holding the carriage in the toasting position, a microcontroller (1) associated with an electronics card, said electronics card including a control circuit according to any one of claims 5 to 7.

9. A toaster according to the preceding claim, **characterized in that** the microcontroller (1) has an internal time counter (7) suitable for generating a signal enabling the carriage to be released and power supply to the heater means (10) to be interrupted when the duration of the current toasting cycle reaches the real toasting duration (Tr), said duration of the current toasting cycle being determined with the help of the time counter (7) of the microcontroller (1).

10. A toaster according to claim 8 or claim 9, **characterized in that** the microcontroller (1), during a toasting cycle, is suitable for measuring at regular time intervals the states of selectors (5, 6) in order to recalculate the toasting duration (Tf, Tr) whenever the user modifies parameters having an influence on said toasting duration.

FIG. 1

FIG. 2

EP 1 397 733 B1

FIG. 3

FIG. 4

FIG. 5

EP 1 397 733 B1